# EUROPÄISCHE PATENTSCHRIFT

(11) **EP 1 599 064 B1**
(45) Veröffentlichungstag und Bekanntmachung des Hinweises auf die Patenterteilung: **20.07.2016**
(21) Anmeldenummer: 05003980.9
(22) Anmeldetag: 24.02.2005
(51) Int. Cl.: H04Q 11/04

(54) **Verfahren und System zur Übertragung von Daten zwischen zwei Kommunikationsanschlüssen**
Method and system for data transmission between two communication connection points
Méthode et système de transmission de données entre deux contacts de communication

(30) Priorität: 16.03.2004 DE 102004013864
(43) Veröffentlichungstag der Anmeldung: 23.11.2005
(73) Patentinhaber: Deutsche Telekom AG, 53113 Bonn (DE)
(72) Erfinder: Daussmann, Frank, 67454 Hassloch (DE); Müller, Christel, Dipl.-Ing., 15732 Schulzendorf (DE); Trinkel, Marian, Dipl.-Ing., 52372 Kreuzau OT Untermaubach (DE)
(74) Vertreter: Cohausz Hannig Borkowski Wißgott

(56) Entgegenhaltungen:
- EP-A- 0 604 901
- WO-A-99/25107
- US-A- 6 081 520
- BETTS R ET AL: "QU'EST-CE QUI REND UN RESEAU INTELLIGENT?" ONDE ELECTRIQUE, EDITIONS CHIRON S.A. PARIS, FR, Bd. 70, Nr. 1, Januar 1990 (1990-01), Seiten 14-21, XP000094680 ISSN: 0030-2430
- MORITA K: "DEVELOPMENT OF ISDN SERVICES" NTT REVIEW, TELECOMMUNICATIONS ASSOCIATION, TOKYO, JP, Bd. 10, Nr. 2, März 1998 (1998-03), Seiten 14-19, XP000740446 ISSN: 0915-2334
- PATENT ABSTRACTS OF JAPAN Bd. 016, Nr. 330 (P-1388), 17. Juli 1992 (1992-07-17) & JP 04 098345 A (FUJITSU LTD), 31. März 1992 (1992-03-31)

## Beschreibung

Die Erfindung betrifft ein Verfahren zur Übertragung von Daten zwischen zwei Kommunikationsanschlüssen über ein Telekommunikationsnetz, wobei ein Telekommunikationsanschluß über eine Anschlußkennung anwählbar ist. Die Erfindung betrifft ebenso ein Telekommunikationssystem mit einem Telekommunikationsnetz und einer Vielzahl von Kommunikationsanschlüssen, die jeweils über eine Anschlußkennung anwählbar sind.

Verfahren und Telekommunikationssysteme zur Übertragung von Daten zwischen zwei Kommunikationsanschlüssen sind im Stand der Technik bekannt. Beispielsweise ist es bekannt mittels einer Rufnummernnachwahl bzw. - überwahl Daten, insbesondere Zahlen an einen Telekommunikationsanschluß zu übermitteln, wobei durch die zuerst gewählten Nummern der gewünschte Telekommunikationsanschluß ausgewählt wird und durch die Nachwahl die Daten repräsentiert werden.

Bei dieser Art, eine Rufnummemnachwahl bzw. -überwahl zur Datenübertragung einzusetzen, besteht das Problem, dass ein Nachweis über die Datenübertragung nicht auf einfache oder direkte Art verfügbar ist. Dieses Verfahren eignet sich somit nicht, wenn der Absender von Daten einen Beleg wünscht, mit dem die Übertragung der Daten einem Dritten gegenüber nachgewiesen werden kann.

Zwar ist es bekannt, dass Telekommunikationsunternehmen ihren Kunden sogenannte Einzelverbindungsnachweise ausstellen, jedoch zeigen die Einzelverbindungsnachweise in verläßlicher Form nur die zuerst gewählten Nummern des ausgewählten Anschlusses, die weitere Nummernfolge ist zumeist nicht vollständig angegeben und weitere textliche Kommentare oder Beschreibungen im Einzelverbinolurigsnachweis sind ggf. fälschbar.

Ein solches System ist zum Beispiel offenbart im Dokument BETTS R ET AL: "QU'EST-CE QUI REND UN RESEAU INTELLIGENT?", ONDE ELECTRIQUE, EDITIONS CHIRON S.A. PARIS, FR, Bd. 70, Nr. 1, Januar 1990 (1990-01), Seiten 14-21, XP000094680.

So verlangt schon der Datenschutz, in Deutschland z.B. über die Telekommunikationsdatenschutzverordnung (TDSV), dass die Verbindungsdaten, die nicht weiter zur Ermittlung der Verbindungskosten nötig sind nach einer gegebenen Zeit aus dem Verbindungsdatensatz zu streichen sind. Aus diesem Grund werden oftmals die letzten Zahlen einer gewählten Rufnummer in einem Einzelverbindungsnachweis bzw. der Telekommunikationsrechnung gelöscht bzw. unkenntlich angedruckt.

Bei einer durchgeführten Rufnummernnachwahl zur Datenübertragung wären sodann gerade die übertragenen Daten von der Löschung betroffen und es kann kein Nachweis geführt werden hinsichtlich der Datenübertragung.

Darüber hinaus kann eine Manipulation an Daten eines Verbindungsnachweis, die nicht die gewählte Anschlußkennung, also z.B. Rufnummer betreffen, nicht ausgeschlossen werden. Lediglich die gewählte Anschlußkennung bzw. deren Anfang ist systembedingt vorgegeben und kann von außen nicht oder nur schwer manipuliert werden, da die in einem Kommunikationsdatensatz enthaltenen gewählten Anschlußkennungen unter hohen Sicherheitsstandards das Abrechnungssytem durchlaufen.

Aus diesem Grund sind Einzelverbindungsnachweise z.B. anerkannte Beweismittel, wenn es bei Streitigkeiten. über eine von Telekommunikationsunternehmen geforderte Gebührenhöhe kommt, in deren Zusammenhang zu prüfen ist, welche Kommunikationsverbindungen von Kunden durchgeführt wurden.

Aufgabe der Erfindung ist es, ein Verfahren und ein Telekommunikationsystem zur Verfügung zu stellen, welche eine sichere und insbesondere nachweisbare Datenübertragung zwischen zwei Telekommunikationsanschlüssen ermöglichen.

Diese Aufgabe wird gemäß einer Alternative dadurch gelöst, dass die zu übertragenden Daten, insbesondere für einen späteren Nachweis der Übertragung, in Form einer Zahlenfolge an den Anfang einer zu wählenden Anschlußkennung gesetzt werden. Die Eingabe der Zahlen bei einem Telekommunikationsgerät erfolgt somit z.B. in der Reihenfolge <Daten><Anschlußkennung>.

In einer zweiten Alternative kann es vorgesehen sein, dass in bekannter Weise die Eingabe der Daten in der Form <Anschlußkennung><Daten> erfolgt, woraufhin systemintern die Reihenfolge getauscht wird in <Daten><Anschlußkennung>.

Durch diese erfindungsgemäßen Lösungen wird erreicht, dass bei einer entstehenden Verbindung zwischen zwei Kommunikationsanschlüssen, bzw. den daran angeschlossenen Kommunikationsgeräten die gewählte oder intern getauschte Reihenfolge von Daten und Anschlußkennung vom Abrechnungssystem des Netzbetreibers erfasst wird und in einen Einzelverbindungsnachweis übernommen wird.

Als Anschlußkennung wird im Rahmen dieser Erfindung jede Kennung verstanden, die einen Telekommunikationsanschluß identifiziert, d.h. einem Nutzer oder einem Telekommunikationsgerät zuordnet. Es kann sich somit bei einer Anschlußkennung z.B. um eine Rufnummer (Call Line Identity-CLI, Home Location Register-HLR), also z.B. Festnetz- oder Mobilnummer oder auch IP-Adresse in einem Computernetzwerk handeln.

Durch die erfindungsgemäße, zumindest interne Voranstellung der Daten wird dabei sichergestellt, das die Daten, insbesondere als Zahlenfolge vollständig in dem Einzelverbindungsnachweis erscheinen und dies insbesondere in einem Bereich der Verbindungsdaten, die systembedingt vorgegeben und schwer oder gar nicht manipulierbar sind und unter höchsten Sicherheitsbedingungen im Abrechnungssystem verarbeitet werden.

Es kann somit ein Einzelverbindungsnachweis dazu herangezogen werden in verläßlicher Weise einem Dritten gegenüber, z.B. dem Empfänger nachzuweisen, zum einen dass die Daten und welche übermittelt wurden und zum anderen insbesondere auch an welchem Datum bzw. zu welcher Uhrzeit. Da in den zur Rechnungslegung erzeugten Verbindungsdaten, bzw. dem Verbindungsdatensatz z.B. anhand der Anschlußkennung des absendenden Telekommunikationsgerätes auch enthalten ist, wer die Datensendung vornimmt, kann auch der Sender der Daten nachgewiesen werden.

Um die Daten in den Einzelverbindungsnachweis übernehmen zu können, muß technisch bedingt eine abrechenbare Telekommunikationsverbindung entstehen.

Durch die Voranstellung der Daten gemäß der ersten Alternative z.B. vor eine anzuwählende Anschlußkennung, z.B. Rufnummer schon bei der Zahleneingabe am Telekommunikationsgerät erkennt das in einem Telekommunikationssystem vorhandene Vermittlungsystem üblicherweise nicht die tatsächlich anzuwählende Anschlußkennung, da nach derzeitigen Stand der Technik Anschlußkennungen, insbesondere Telefonrufnummern vom Beginn an ausgewertet werden.

Die vorangestellten Daten würden im Regelfall und insbesondere beabsichtigterweise keine gültige Anschlußkennung repräsentieren, so daß die Vermittlungsstelle eine Fehlvermittlung feststellt, d.h. es entsteht keine abrechenbare Verbindung.

Die Problematik, eine Datenübertragung vorangestellter Daten an eine nachgestellte Anschlußkennung zu ermöglichen und hierüber im Einzelverbindungsnachweis bzw. der Rechnung einen Nachweis zu erhalten, kann gemäß der Erfindung dadurch gelöst werden, dass systemintern wenigstens die vorangestellte Zahlenfolge, insbesondere in Verbindung mit der anzuwählenden Anschlußkennung, eine virtuelle Anschlußkennung, insbesondere eine virtuelle Rufnumer bildet, die in dem Abrechnungssystem des Telekommunikationsnetzes verarbeitet werden kann.

Hierzu kann es erfindungsgemäß vorgesehen sein, dass dem Telekommunikationsystem, insbesondere der Vermittlungsstelle vorgegeben wird die gewählte Gesamtziffernfolge bzw. Gesamtzahlenfolge, insbesondere zumindest die vorangestellten Daten, als eine virtuelle Anschlußkennung zu behandeln.

Im Rahmen der gesamten Erfindung wird dabei unter einer virtuellen Anschlußkennung eine Ziffern- oder Zahlenfolge aus Daten und ggf.

Anschlußkennung, d.h. <Daten> bzw. <Daten> <Anschlußkennung> verstanden, wobei abrechnungstechnisch diese Ziffern- oder Zahlenfolge keine tatsächlich existente Anschlußkennung darstellt bzw. keinem Anschluß/Gerät oder Kunden zugeordnet ist, jedoch als Anschlußkennung systemintern für die Abrechnung behandelt wird.

Zur Vergabe einer virtuellen Anschlußkennung kann es verschiedene Möglichkeiten geben.

So kann z.B. die Bildung der virtuellen Anschlußkennung oder im Beispiel konkret einer virtuellen Rufnummer dann erfolgen, wenn die Ermittlung einer anzuwählenden Anschlußkennung aus einem vorderen gewähltem Anschlußkennüngsanteil ergebnislos ist, insbesondere zu einer Fehlvermittlung führt. Statt die Fehlermeldung auszugeben kann systemintern eine Überprüfung erfolgen, ob eine Datenübermittlung stattfinden soll, z.B. dadurch dass ein hinterer Anschlußkennungsanteil der gewählten Gesamtzahlenfolge oder Gesamtziffernfolge dahingehend ausgewertet wird, ob dieser eine gültige Anschlußkennung z.B. eine gültige Telefonrufnummer umfasst.

Beispielsweise kann zur Übermittlung der Daten an einen Telekommunikationsanschluß ein hinter den Daten folgender Anschlußkennungsanteil ausgewertet werden und aus diesem Anschlußkennungsanteil die Anschlußkennung des Telekommunikationsanschlusses ermittelt und insbesondere angewählt werden. Bei entstehender Verbindung können dann die voranstehenden Daten an den Anschluß übermittelt werden.

Ebenso kann es vorgesehen sein, die Gesamtzahlenfolge aus Daten und Anschlußkennung auf eine Schlüsselzahlenfolge, insbesondere eine Service-Anschlußkennung, insbesondere eine Service-Rufnummer zu durchsuchen. Dies kann grundsätzlich bei jeder Anschlußkennungswahl erfolgen oder aber auch erst wenn die Auswertung der Anschlußkennung vom Beginn an keine Verbindung entstehen lässt.

Die Suche nach einer Schlüsselzahlenfolge kann hierbei eindeutiger zu einer korrekten Vermittlung und Datenübertragung führen, insbesondere wenn sich die Telekommunikationsunternehmen-darauf verständigen, diese Art der Datenübertragung nur mit einer oder mehreren bestimmten Schlüsselzahlenfolgen zu erlauben.

Derartige Schlüsselzahlenfolgen sind mit Bezug auf Telefonrufnummern als Anschlußkennungen z.B. als Service-Rufnummern am Beginn einer Telefonnummer bekannt, z.B. als 0180er oder 0190er Rufnummern. In vergleichbarer Weise kann ein Datenübermittlungsdienst mit einer typischen und charakteristischen Nummer initiiert werden, die inmitten einer Gesamtzahlenfolge, also insbesondere nach zu übertragenden Daten eingegeben ist und insbesondere vom Vermittlungssystem gesucht wird.

Gemäß der Alternative mit vorangestellter Anschlußkennung bzw. Schlüsselzahlenfolge oder Service-Nummer kann das gesamte bisherige Vermittlungssystem in bekannter Weise arbeiten, d.h. vom Beginn an die gewählte Anschlußkennung z.B. Rufnummer prüfen. Es wird sodann anhand einer speziellen Service-Anschlußkennung erkannt, dass eine Datenübermittlung mit gewünschtem Nachweis erfolgen soll. Sodann wird systemintern die Reihenfolge der gewählten Zahlen oder Ziffern getauscht und aus der tatsächlich gewählten Folge <Service-Anschlußkennung><Daten> die virtuelle Anschlußkennung <Daten><Service-Anschlußkennung> gebildet, die an das Abrechnungssystem weitergegeben wird.

In Abhängigkeit des Auftretens einer Schlüsselzahlenfolge am Anfang oder in der gewählten Gesamtzahlenfolge / Gesamtziffernfolge kann somit gemäß beider Alternativen die virtuelle Anschlußkennung gebildet und weiterverarbeitet werden, d.h. zumindest die Daten, ggf. die Gesamtzahlenfolge / -ziffernfolge werden als virtuelle Anschlußkennung in das Abrechnungsystem übernommen und es wird eine Vermittlung zur festgestellten tatsächlichen Anschlußkennung durchgeführt, wonach bei bestehender Verbindung die Daten übertragen werden.

Die zu übermittelnden Daten können z.B. Zahlendaten in Form einer Zahlenfolge sein oder es kann vorgesehen sein die Daten vor einer Übertragung in eine Zahlenfolge zu konvertieren. Dies kann auch mittels einer Datenverarbeitung erfolgen, die z.B. in einem absendenden Telekommunikationsgerät abläuft.

Vorteil des Verfahrens oder eines derartigen Telekommunikationssystem mit einem Telekommunikationsnetz und einer Vielzahl von Kommunikationsanschlüssen, die jeweils über eine Anschlußkennung anwählbar sind, und bei dem zur Übertragung von Daten, insbesondere für einen späteren Nachweis der Übertragung, die Daten in Form einer Zahlenfolge an den Anfang einer zu wählenden Anschlußkennung setzbar sind oder durch Vertauschung systemintern gesetzt werden, ist es insbesondere, dass eine Prüfung der Möglichkeit, eine Datenübertragung zum gewählten Anschluß durchzuführen schon in der Vermittlungstelle des Anrufers durchgeführt werden kann.

Gemäß dem Stand der Technik wurde eine Verbindung zu einer angegebenen Anschlußkennung versucht aufzubauen wobei ggf. von dem angerufenen Telekommunikationsendgerät erst eine Rückmeldung erfolgt hinsichtlich einer evtl. Inkompatibilität. Dies kann zu einer Belastung des Telekommunikationsnetzes mit nicht möglichen Verbindungsanfragen führen, die gemäß der Erfindung schon direkt bei der Wahl und Eingabe der Gesamtzahlenfolge/Gesamtziffernfolge in der ersten Vermittlungsstelle vermieden wird.

Das erfindungsgemäße Vertahren oder Telekommunikationssystem kann überall dort zu Einsatz kommen, wo Daten nachweisbar zu einem Telekommunikationsanschluß übertragen werden sollen. Z.B. kann eine Verwendung bei der Übermittlung von Lottozahlen oder zur Durchführung von Abstimmungen, insbesondere Wahlen stattfinden. Die Rechnung und/oder der Einzelverbindungsnachweis dienen als Beleg für die Datenübertragung und insbesondere wer die Übertragung wann vorgenommen hat und welche Daten dabei übertragen wurden.

Ausführungsbeispiele der Erfindung zeigen die nachfolgenden Figuren. Es zeigen:
- Figur 1:: Eine Ausführung gemäß erster Alternative
- Figur 2:: Eine Ausführung gemäß zweiter Alternative

Die nachfolgende Figuren zeigen Ausführungsbeispiele, bei denen die Lottozahlen 1, 9, 12, 27, 31, 43 an die Lottogesellschaft über eine Telefonverbindung übermittelt werden sollen. In diesem Ausführungsbeispiel ist die Anschlußkennung durch eine Telefonrufhummer gegeben, z.B. eine CLI des Empfängers.

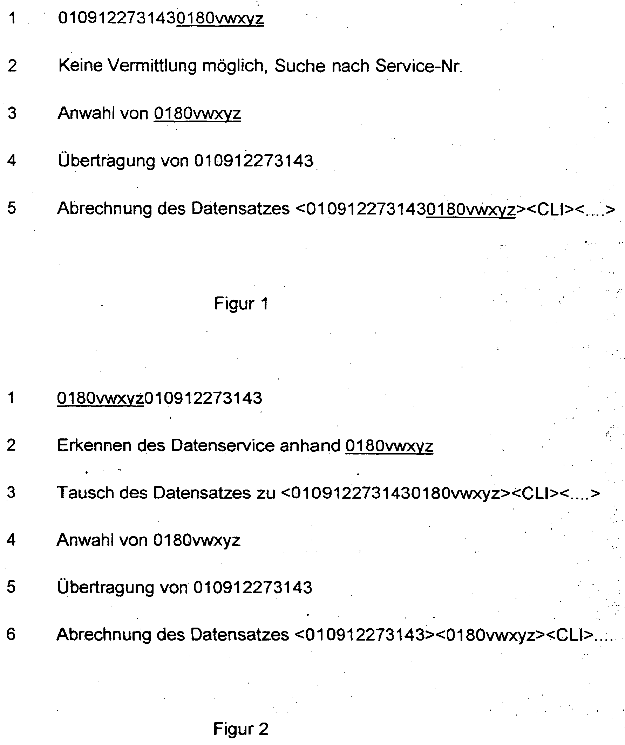

Hierzu wählt ein Benutzer gemäß Figur 1 und erstem Ausführungsbeispiel auf seinem Telefon die Gesamtnummerfolge 0109122731430180vwxyz, wobei die einstelligen Lottozahlen z.B. durch Voranstellung einer Null eingegeben werden. Die Lottogesellschaft ist z.B. unter der Anschlußkennung bzw. Telefonnummer 0180vwxyz erreichbar, wobei die Buchstaben Zahlenplatzhalter darstellen.

Bei der Anwahl dieser Gesamtnummer 0109122731430180vwxyz stellt die Vermittlungsstelle bei Prüfung vom Beginn der Nummer an fest, dass eine Vermittlung nicht möglich ist und durchsucht die Gesamtnummer nach einer Service-Rufnummer, die in der Gesamtnummer angeordnet ist. Hierbei erkennt die Vermittlungsstelle das Vorkommen der Servicenummer 0180vwxyz.

Es wird sodann die Rufnummer 0180vwxyz angewählt und die Daten 010912273143 werden an die Lottogesellschaft übertragen.

Im Anschluß wird der Kommunikationsdatensatz <0109122731430180vwxyz><CLI>.... an das Abrechnungssystem übergeben und es erfolgt in der Telefonrechnung, z.B. im Einzelverbindungsnachweis, die Lottozahl als virtuelle Anschlußkennung 010912273143 die vom Kunden an einem bestimmten Tag zu einer bestimmten Uhrzeit gewählt wurde. Hierbei ist ebenfalls der Kunde durch die sogenannte Call Line Identity <CLI>, d.h. seine Anschlußkennung/Rufnummer identifiziert. Daten wie Uhrzeit und Datum können in weiteren Datenfeldern des Kommunikationsdatensatzes enthalten sein.

Bei dem Ausführungsbeispiel gemäß der zweiten Alternative und Figur 2 gibt der Kunde auf seinem Telefon die Gesamtnummerfolge 0180vwxyz010912273143 ein. Die Vermittlungsstelle erkennt bei einer Prüfung von Beginn der Gesamtnummerfolge anhand der Servicerufnumer 0180vwxyz, dass Daten übertragen werden sollen. In dem Kommunikationsdatensatz, der mit der Benutzung des Telefonnetzes entsteht, werden Service-Rufnummer und Daten in der Reihenfolge getauscht und der Datensatz <0109122731430180vwxyz><CLI><....> gebildet. Die Vermittlungsstelle wählt 0180vwxvz und überträgt an die Gegenstelle die Daten 010912273143. Der getauschte Datensatz <0109122731430180vwxyz><CLI><....> wird zum Abrechnungssystem weitergeleitet und die Nachweisdaten erscheinen wie obenbeschrieben in der Rechnung.

Die Schritte von Tausch und Anwahl bzw. Datenübertragung können auch in umgekehrter Reihenfolge stattfinden, d.h. zuerst Anwahl und Datenübertragung und dann Tausch im Datensatz zur Weiterleitung an die Abrechnungstelle.

## Patentansprüche

1. Verfahren zur Übertragung von Daten zwischen zwei Kommunikationsanschlüssen über ein Telekommunikationsnetz, wobei ein Telekommunikationsanschluß über eine Anschlußkennung anwählbar ist, **dadurch gekennzeichnet, dass** die zu übertragenden Daten, insbesondere für einen späteren Nachweis der Übertragung, in Form einer Zahlenfolge an den Anfang einer zu wählenden Anschlußkennung gesetzt werden.

2. Verfahren zur Übertragung von Daten zwischen zwei Kommunikationsanschlüssen über ein Telekommunikationsnetz, wobei ein Telekommunikationsanschluß über eine Anschlußkennung anwählbar ist, **dadurch gekennzeichnet, dass** die zu übertragenden Daten, in Form einer Zahlenfolge an eine zu wählende Anschlußkennung angefügt werden und die Reihenfolge von Daten und Anschlußkennung, insbesondere in der Vermittlungsstelle, getauscht werden, insbesondere für einen späteren Nachweis der Übertragung.

3. Verfahren nach Anspruch 1 oder 2, **dadurch gekennzeichnet, dass** wenigstens die datenrepräsentierende vorangestellte Zahlenfolge, insbesondere in Verbindung mit der nachfolgenden anzuwählenden Anschlußkennung, eine virtuelle Anschlußkennung bildet, die in einem Abrechnungssystem des Telekommunikationsnetzes verarbeitet wird.

4. Verfahren nach einem der vorherigen Ansprüche 1 oder 3, **dadurch gekennzeichnet, dass** zur Übermittlung der Daten an einen Telekommunikationsanschluß ein hinter den Daten folgender Anschlußkennungsanteil ausgewertet wird und aus diesem Anschlußkennungsanteil die Anschlußkennung des Telekommunikationsanschlusses ermittelt und insbesondere angewählt wird.

5. Verfahren nach einem der vorherigen Ansprüche 1 oder 3 bis 4, **dadurch gekennzeichnet, dass** die Bildung der virtuellen Anschlußkennung dann erfolgt, wenn die Ermittlung einer anzuwählenden Anschlußkennung aus einem vorderen Anschlußkennungsanteil ergebnislos ist, insbesondere zu einer Fehlvermittlung führt.

6. Verfahren nach einem der vorherigen Ansprüche, **dadurch gekennzeichnet, dass** die Anschlußkennung eine CLI, HLR oder IP-Adresse ist.

7. Verfahren nach einem der vorherigen Ansprüche, **dadurch gekennzeichnet, dass** die Gesamtzahlenfolge aus Daten und Anschlußkennung auf eine Schlüsselzahlenfolge, insbesondere eine Service-Anschlußkennung, durchsucht wird.

8. Verfahren nach Anspruch 7, **dadurch gekennzeichnet, dass** in Abhängigkeit des Auftretens der Schlüsselzahlenfolge die virtuelle Anschlußkennung gebildet und weiterverarbeitet wird.

9. Verfahren nach einem der vorherigen Ansprüche, **dadurch gekennzeichnet, dass** die zu übermittelnden Daten Zahlendaten in Form einer Zahlenfolge sind oder die Daten in eine Zahlenfolge konvertiert werden.

10. Telekommunikationssystem mit einem Telekommunikationsnetz und einer Vielzahl von Kommunikationsanschlüssen, die jeweils über eine Anschlußkennung anwählbar sind, **dadurch gekennzeichnet, dass** zur Übertragung von Daten für einen späteren Nachweis der Übertragung, insbesondere systemintern durch Vertauschung, die Daten in Form einer Zahlenfolge an den Anfang einer zu wählenden Anschlußkennung setzbar sind.

11. Verwendung eines Verfahrens oder eines Telekommunikationssystems nach einem der vorherigen Ansprüche zur Übermittlung von Lottozahlen oder zur Durchführung von Abstimmungen, insbesondere Wahlen.

## Claims

1. Method for transmitting data between two communication ports via a telecommunication network, wherein a telecommunication port is selectable using a port identifier, **characterized in that** the data to be transmitted are, particularly for later verification of the transmission, placed at the beginning of a port identifier that is to be chosen, in the form of a numerical sequence.

2. Method for transmitting data between two communication ports via a telecommunication network, wherein a telecommunication port is selectable using a port identifier, **characterized in that** data to be transmitted, in the form of a numerical sequence, are appended to a port identifier that is to be chosen and the order of data and port identifier are swapped, particularly in the switching centre, particularly for later verification of the transmission.

3. Method according to Claim 1 or 2, **characterized in that** at least the data-representing prefixed numerical sequence, particularly in conjunction with the subsequent port identifier that is to be selected, forms a virtual port identifier that is processed in a billing system of the telecommunication network.

4. Method according to either of the preceding Claims 1 and 3, **characterized in that** transmission of the data to a telecommunication port involves a port identifier component that follows behind the data being evaluated and the port identifier of the telecommunication port being ascertained, and particularly selected, from this port identifier component.

5. Method according to one of the preceding Claims 1 or 3 and 4, **characterized in that** the virtual port identifier is formed if, when a port identifier that is to be selected is being ascertained from a front port identifier component, there is no result, in particular said ascertainment leads to incorrect switching.

6. Method according to one of the preceding claims, **characterized in that** the port identifier is a CLI, HLR or IP address.

7. Method according to one of the preceding claims, **characterized in that** the overall numerical sequence comprising data and port identifier is searched for a key numerical sequence, particularly a service port identifier.

8. Method according to Claim 7, **characterized in that** the occurrence of the key numerical sequence is taken as basis for forming the virtual port identifier and processing it further.

9. Method according to one of the preceding claims, **characterized in that** the data to be transmitted are numerical data in the form of a numerical sequence or the data are converted into a numerical sequence.

10. Telecommunication system having a telecommunication network and a multiplicity of communication ports that are each selectable using a port identifier, **characterized in that** transmission of data can involve, for later verification of the transmission, the data being placed at the beginning of a port identifier that is to be chosen, in the form of a numerical sequence, in particular internally in the system by means of transposition.

11. Use of a method or of a telecommunication system according to one of the preceding claims for transmitting lottery numbers or for performing ballots, particularly elections.

## Revendications

1. Procédé de transmission de données entre deux connexions de communication par le biais d'un réseau de télécommunication, une connexion de télécommunication pouvant être sélectionnée par le biais d'un identifiant de connexion, **caractérisé en ce que** les données à transmettre, notamment en vue d'une justification ultérieure de la transmission, sont placées sous la forme d'une série de chiffres au début d'un identifiant de connexion à sélectionner.

2. Procédé de transmission de données entre deux connexions de communication par le biais d'un réseau de télécommunication, une connexion de télécommunication pouvant être sélectionnée par le biais d'un identifiant de connexion, **caractérisé en ce que** les données à transmettre sont ajoutées sous la forme d'une série de chiffres à un identifiant de connexion à sélectionner et la séquence de données et d'identifiant de connexion sont échangés, notamment dans l'autocommutateur, notamment pour une justification ultérieure de la transmission.

3. Procédé selon la revendication 1 ou 2, **caractérisé en ce qu'**au moins la série de chiffres placée en préfixe qui représente les données, notamment en association avec l'identifiant de connexion à sélectionner qui suit, forme un identifiant de connexion virtuelle qui est traité dans un système de facturation du réseau de télécommunication.

4. Procédé selon l'une des revendications précédentes 1 ou 3, **caractérisé en ce qu'**en vue de communiquer les données à une connexion de télécommunication, une part d'identifiant de connexion qui vient à la suite des données est interprétée et l'identifiant de connexion de la connexion de télécommunication est déterminée et notamment sélectionnée à partir de cette part d'identifiant de connexion.

5. Procédé selon l'une des revendications précédentes 1 ou 3 à 4, **caractérisé en ce que** la formation de l'identifiant de connexion virtuelle a lieu lorsque la détermination d'un identifiant de connexion à sélectionner à partir d'une part d'identifiant de connexion avant ne donne aucun résultat, notamment mène à une commutation erronée.

6. Procédé selon l'une des revendications précédentes, **caractérisé en ce que** l'identifiant de connexion est une adresse CLI, HLR ou IP.

7. Procédé selon l'une des revendications précédentes, **caractérisé en ce que** la série totale de chiffres composée des données et de l'identifiant de connexion est examinée pour y détecter une série de chiffres de codage, notamment un identifiant de connexion de service.

8. Procédé selon la revendication 7, **caractérisé en ce que** l'identifiant de connexion virtuelle est formé et soumis à un traitement ultérieur en fonction de la survenance de la série de chiffres de codage.

9. Procédé selon l'une des revendications précédentes, **caractérisé en ce que** les données à communiquer sont des données numériques sous la forme d'une série de chiffres ou les données sont converties en une série de chiffres.

10. Système de télécommunication comprenant un réseau de télécommunication et une pluralité de connexions de communication, lesquelles peuvent respectivement être sélectionnées par le biais d'un identifiant de connexion, **caractérisé en ce qu'**en vue de la transmission de données, pour une justification ultérieure de la transmission, notamment en interne du système par permutation, les données peuvent être placées sous la forme d'une série de chiffres au début d'un identifiant de connexion à sélectionner.

11. Utilisation d'un procédé ou d'un système de télécommunication selon l'une des revendications précédentes pour la communication de chiffres du loto ou pour réaliser des votes, notamment des élections.
